# EUROPEAN PATENT SPECIFICATION

(11) **EP 0 589 347 B1**
(45) Date of publication and mention of the grant of the patent: **06.08.1997**
(21) Application number: 93114879.5
(22) Date of filing: 15.09.1993
(51) Int. Cl.: H02H 3/08, H02H 3/093, H02H 3/00

(54) **Circuit breaker and method of controlling the same**
Ausschalter und Verfahren zu seiner Kontrolle
Interrupteur et procédé pour le contrôle de cet interrupteur

(30) Priority: 16.09.1992 JP 246098/92
(43) Date of publication of application: 30.03.1994
(73) Proprietor: HITACHI, LTD., Chiyoda-ku, Tokyo 100 (JP)
(72) Inventor: Sato, Eietsu, Kitakanbara-gun, Niigata-ken (JP); Yamaguchi, Akihiro, Kitakanbara-gun, Niigata-ken (JP); Teraoka, Wataru, Shibata-shi (JP); Hiyama, Yasuyuki, Shibata-shi (JP)
(74) Representative: Strehl Schübel-Hopf Groening & Partner

(56) References cited:
- EP-A- 0 432 054
- DE-A- 3 114 549
- DE-A- 3 247 439
- US-A- 4 819 125
- US-A- 4 958 252
- US-A- 5 086 367
- US-A- 5 101 316
- US-A- 5 113 304

## Description

### BACKGROUND OF THE INVENTION

The present invention relates to a circuit breaker for detecting an abnormal current to open a circuit contact, and more particularly to a circuit breaker having a function of storing information related to a load current inclusive of a tripping control and displaying it, as required and a method of controlling such a circuit breaker. Such prior art is known from the US-Patent US-A-4 958 252.

The detection of information related to a tripping control of a circuit breaker in a circuit system and the detection of the magnitude of an abnormal current and a flowing time of the abnormal current are very useful means for effectively performing a maintenance/check work. In order to acquire such information, it has hitherto been required that an electric power unit for external control is connected to the circuit breaker always. Namely, at the time of operation of a circuit breaker resulting from an abnormal current or at the time of disconnection of a main circuit upon maintenance/check, a power supply is necessarily stopped. Therefore, in order to hold and display the information, it is necessary to always provide an electric power unit for external control together with the circuit breaker.

As mentioned above, in the prior art, it is necessary to always supply an electric power from an power unit for external control in order to hold and display circuit information. Therefore, the prior art has a problem that a facility and a power supply wiring for the power unit are required in addition to a circuit breaker connected to an AC circuit as a main circuit and it is difficult to avoid an increase of the cost of system construction. Further, when the amount of information to be displayed is large, it is necessary to cope with the large amount of information by a display unit in addition with the circuit breaker body. Accordingly, there is a problem that the circuit breaker has an increased cost.

### SUMMARY OF THE INVENTION

An object of the present invention is to solve the above problems or to provide a circuit breaker which stores information related to a load current of the circuit breaker at the time of a tripping operation control or at the time of a normal use in a non-volatile manner (hereinafter referred to as tripping control related information), enabling a fetch of a tripping control related information by providing a power unit for external control at a required time.

The above object is achieved by a circuit breaker for detecting a load current flowing through an AC circuit to perform a tripping operation according to claim 1 and by a method according to claim 4.

With the above construction, the tripping control related information of the circuit breaker is written into the non-volatile storage means immediately before the tripping operation is completed. After the tripping operation is completed, the supply of an electric power from the AC circuit is stopped but information in the non-volatile storage means is preserved without being lost.

At a point of time when it is required to read the tripping control related information, an electric power is supplied from the portable power unit so that information stored in the non-volatile storage means is read and displayed.

Information concerning a flowing current at the time of a normal use of the circuit breaker is written in the non-volatile storage means and is updated.

### BRIEF DESCRIPTION OF THE DRAWINGS

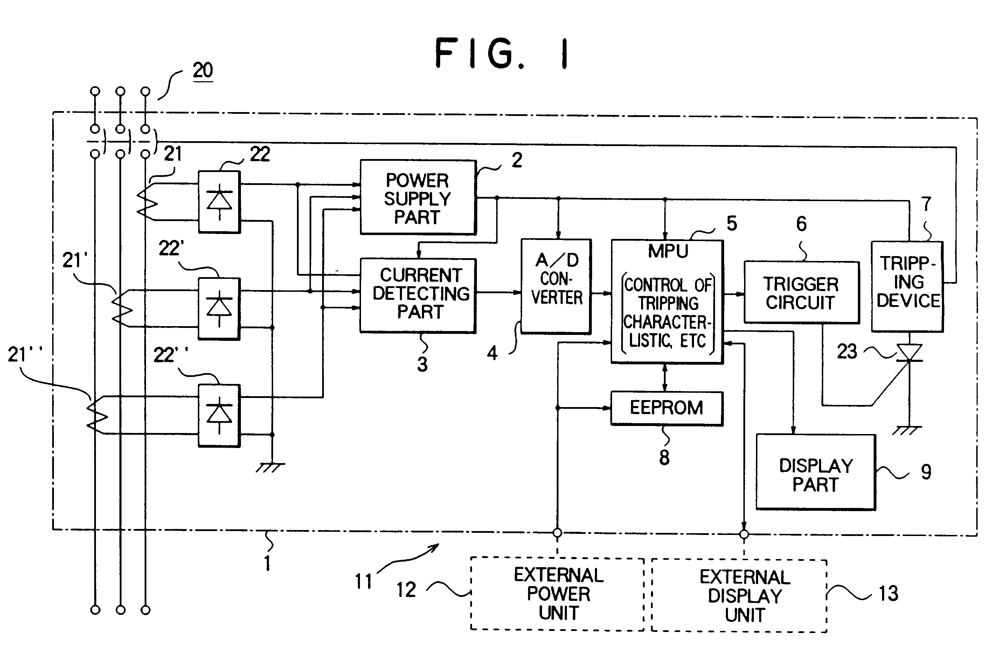

Fig. 1 is a block diagram showing the construction of a circuit breaker according to an embodiment of the present invention;
Fig. 2 is a diagram showing a tripping characteristic in the embodiment shown in Fig. 1;
Fig. 3 is a flow chart showing the operation of the embodiment shown in Fig. 1;
Figs. 4A and 4B are views showing the external appearance of the circuit breaker shown in Fig. 1;
Fig. 5 is a perspective view of a portable power unit;
Fig. 6 is a perspective view of an external display unit;
Fig. 7 is a diagram showing the concept of the operation of data of the maximum current value;
Figs. 8A, 8B, 8C and 8D are views showing the construction of an external display unit and examples of display; and
Fig. 9 is a diagram showing the variations of the maximum power to be grasped.

### DESCRIPTION OF THE PREFERRED EMBODIMENTS

Reference numeral 1 designates a circuit breaker body. A current flowing through an AC circuit 20 as a main circuit is inputted to a current detecting part 2 through current transformers 21, 21' and 22'' and rectifier circuits 22, 22' and 22''. A detection signal of the current detecting part 3 is converted by an A/D converter 4 into a predetermined signal such as effective value, average value or peak value and is then transmitted to an MPU (microprocessor unit) 5 of the next stage. In the MPU 5, a control capable of obtaining a predetermined tripping characteristic is performed.

The circuit breaker body 1 is further provided with a tripping device 7, a gate circuit 23 for grounding the tripping device 7, a trigger circuit 6 for operating the gate circuit 23, an EEPROM 8, a display part 9, and a power supply part 2 for supplying an operating voltage to each constituent element.

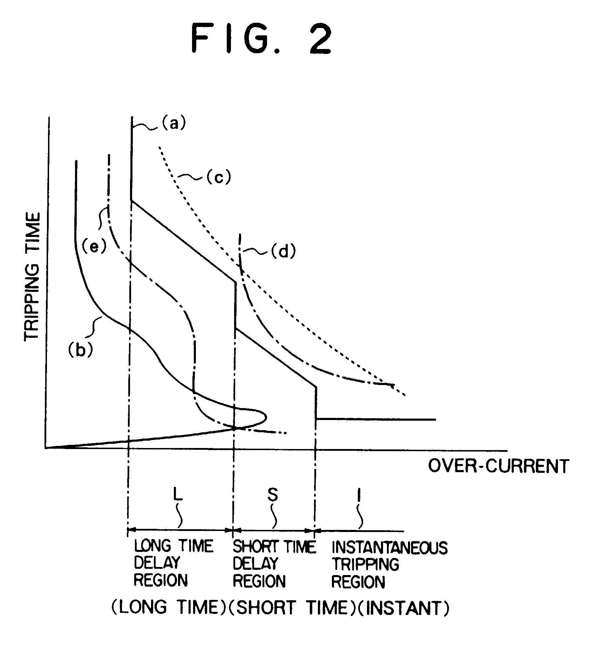

As shown in Fig. 2, a tripping characteristic curve (a) of the circuit breaker is set such that a time for trip of the circuit breaker corresponds to, for example, three steps, that is, a long time delay region L, a short time delay region S and an instantaneous tripping region I in accordance with the value of a current which flows through an AC main circuit 20. It is required that the circuit breaker has a function of protecting a circuit wiring from an over load and a short-circuit current. Therefore, it is required that the characteristic curve (a) of the circuit breaker does not intersect an allowable current characteristic curve of the wiring. Similarly, it is required that the characteristic curve (a) of the circuit breaker holds a cooperating relation with an operating characteristic curve (d) of a high voltage side equipment and an operating characteristic curve (e) of a low voltage side equipment and intersects none of those curves. For example, before the high voltage side equipment operates, the circuit breaker breaks a circuit so that a power failure resulting from an accident is prevented from affecting another system. Further, the characteristic curve (a) of the circuit breaker does not intersect a load current characteristic curve (b). For example, the characteristic curve (a) of the circuit breaker is set such that the circuit breaker does not operate for a rush current which is similar to a starting current of a motor or may be generated even when a load is normal.

At a point of time when an accident current beyond a rated current flows through the main circuit by a time corresponding to the tripping characteristic region set as mentioned above, the MPU 5 drives the tripping device 7 through the trigger circuit 6 on one hand to perform a tripping operation of the circuit breaker body 1 and writes the accident current value into non-volatile storage means, for example, an EEPROM (or electrically erasable programmable ROM) 8 on the other hand. After the tripping operation has been completed, a stopped condition with no power supplied to each constituent part is assumed since no current flows through the main circuit. However, data written in the EEPROM 8 is preserved.

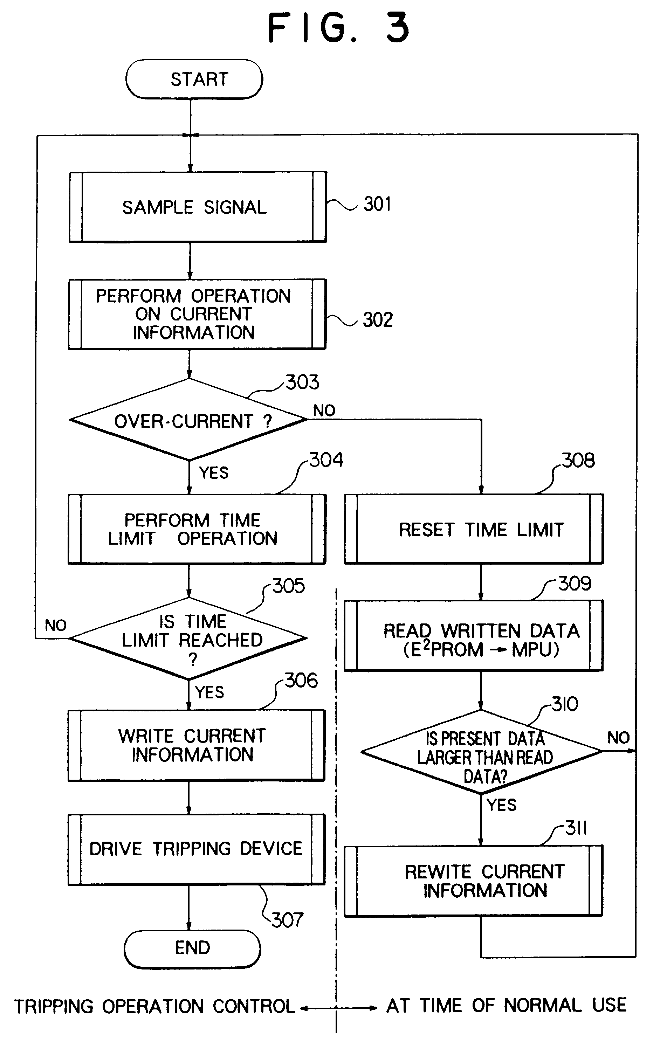

The operation of the circuit breaker body 1 will be explained in detail on the basis of a flow chart shown in Fig. 3.

The MPU 5 samples a signal outputted from the A/D converter 4 (step 301) and performs an operation on current information (step 302). On the basis of the tripping characteristic curve (a) shown in Fig. 2, the judgement is made as to whether or not the detected load current is an over-current (step 303). In the case where the detected load current is an over-current, a time limit operation set for each of the long time delay region, the short time delay region and the instantaneous tripping region is performed in step 304. In the case where a predetermined time limit is reached (step 305), the MPU 5 writes the current information into the EEPROM 8 (step 306) and drives the tripping device 7 (step 307). In the case where the predetermined time limit is not reached (step 305), the flow returns to step 301 to sample the signal.

When it is determined as the result of judgement in step 303 that the detected load current is not an over-current, a time limit for writing of the current information is reset (step 308) so that current information data written at the preceding time limit is read from the EEPROM 8 to MPU 5 (step 309). Data at the present point of time is compared with the read data (step 310). In the case where the value of the present data is larger than that of the read data, the current information in the EEPROM 8 is rewritten (step 311). In the case where the value of the present data is not larger than that of the read data, the rewriting of current information is not made and the flow returns to step 301 in which the signal sampling is performed.

With the above operation, it is possible to perform a tripping control of detecting an over-current for each of the long time, short time and instant operating regions in accordance with the tripping characteristic curve and to record current information data at the time of normal use.

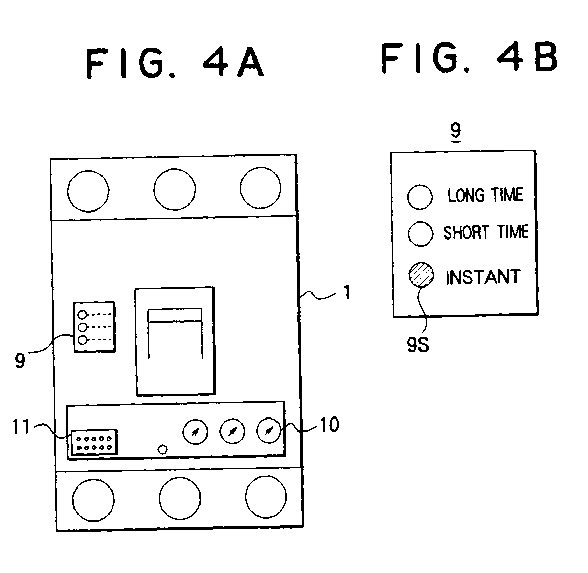

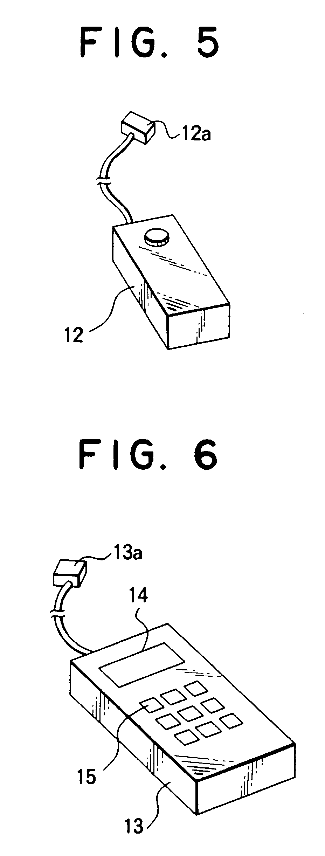

For example, the degree of magnitude of an accident current having caused a tripping operation of the circuit breaker body 1 can be known by connecting a portable power unit 12 (for example, a battery box using an Ni-Cd buttery) of Fig. 5 to the circuit breaker body 1 shown in Fig. 4A to activate an LED (for example, 9s in Fig. 4B) of the display part 9 of the circuit breaker body 1. Namely, by connecting a connector 12a of the portable power unit 12 to a connector connecting portion 11, an electric power is supplied to the MPU 5 and the EEPROM 8 so that the MPU 5 reads data written in the EFPROM 8 to activate the display part 9 of the circuit breaker body 1 on the basis of the read data. Thus, an accident current region can be known by merely connecting the portable power unit 12 so that the display is made on the display part 9 of the circuit breaker body 1. In place of the buttery box shown in the present embodiment, an AC adapter may be used as the portable power unit 12. It is also possible to incorporate a capacitor with a large capacity to effect the display on the display part 9 by the ON-OFF operation of a switch.

In the case where information concerning a flowing current in a state of normal use of the circuit breaker is to be displayed, for example, in the case where the maximum effective value of a flowing current changing with the lapse of time is to be displayed as information, the MPU 5 compares the effective value of a current which is flowing at that point of time and the maximum effective current value at a certain point of time which has already been stored in the EEPROM 8. At a point of time when a large effective current value larger than the value having been stored in the EEPROM 8 is detected by the current detecting circuit, that current value is written into the EEPROM 8, thereby updating the stored content.

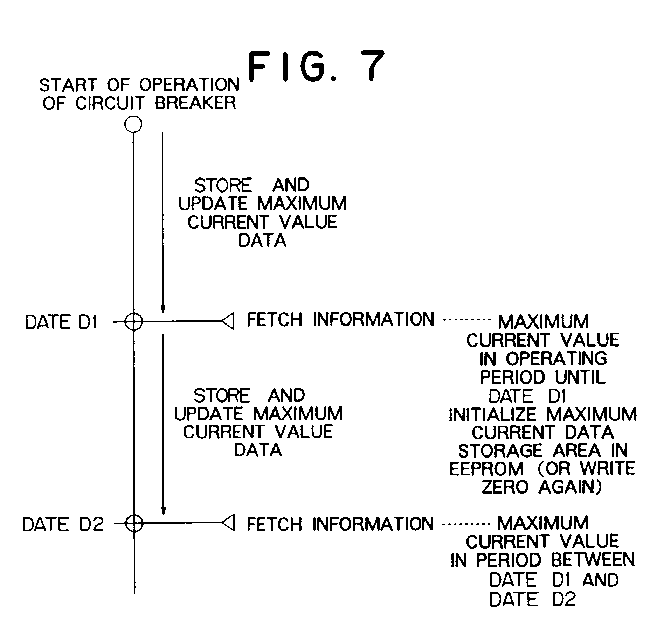

Fig. 7 shows an example of the operation of the circuit breaker in the case where the maximum effective value of a flowing current is taken out for each date.

Thus, information concerning a flowing current and required for the maintenance/check of the circuit breaker body 1 is stored and held even if the supply of a current to the main circuit is stopped so that no electric power is supplied to each constituent part. The reading of the information is performed in a manner similar to that mentioned above.

However, when it is desired to know data stored and preserved in the EEPROM 8, for example, the magnitude of an accident current at the time of a tripping operation, an external display unit 13 as shown in Fig. 6 having a portable power unit such as a buttery is connected to the circuit breaker body 1 and desired information is selected by use of a selection key switch 15 to display the desired information on a liquid crystal display window 14.

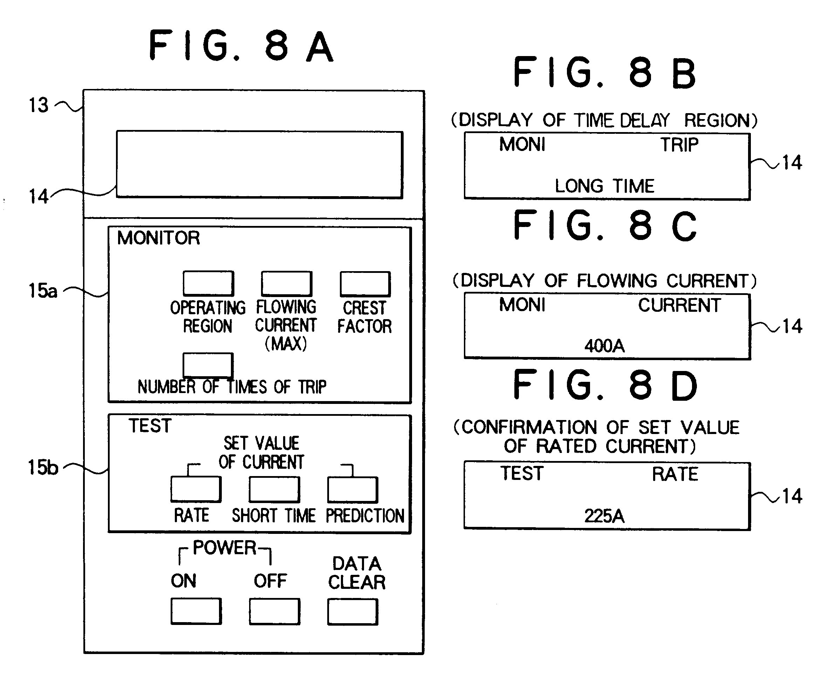

Figs. 8A, 8B and 8C show the selection key switch 15 of the external display device 13 and an example of display on the display window 14. When an time delay designating button of a monitor switch 15a shown in Fig. 8A is depressed, LONG TIME (or a long time delay region) is displayed on the display window 14, as shown by way of example in Fig. 8B. Similarly, Fig. 8C shows an example of display of a flowing current and Fig. 8D shows an example of display when a rated current designating button of a test switch 15b is depressed. Information such as the number of times of trip and an input waveform crest factor (or the ratio of the effective value of an AC current waveform to the peak value thereof) can be stored in the EEPROM 8 so that it can be displayed by an input from the selection key switch 15. The external display unit 13 can be provided with an ON switch, an OFF switch, a data clear switch and so on in addition with the above-mentioned switches.

As mentioned above, when the acquisition of the minimum necessary information, for example, only an operating current region flowing through an AC main circuit suffices at the time of generation of an accident or at the time of check of the circuit, the portable power unit 12 shown in Fig. 5 is connected to the circuit breaker body 1 to confirm the contents displayed on the display part 9. When it is desired to acquire further detailed information concerning a load current, the external display unit 13 shown in Fig. 7 is connected to the circuit breaker body 1 to select necessary information by the selection key switch 15.

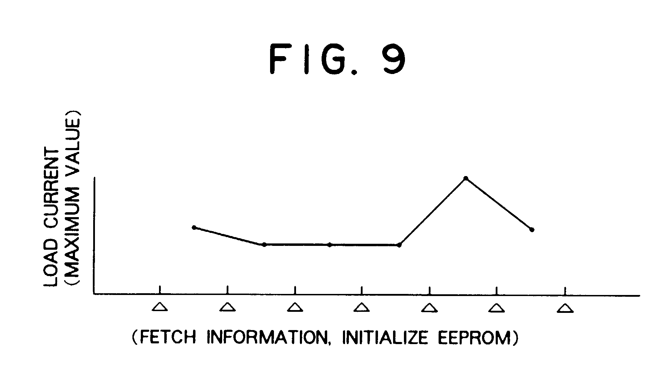

Though the circuit breaker body 1 is provided with the display part 9 for displaying a part of stored information, as shown in Figs. 4A and 4B, the display on the display part 9 is not necessary in the case whether or not the external display unit 13 is utilized. Also, by providing a reset key which resets data stored in the external display unit 13 and sets an initial value to the EEPROM 8 again, it becomes possible to record and manage the maximum value of a flowing current in a fixed period, as shown in Fig. 9 and it is also possible to grasp the situation of change of the used amount of power over a long period of time.

The MPU 5 corresponds to control means for performing a predetermined tripping control on the basis of the detected value of a load current. In the case where the writing is necessary, an MPU is generally preferable. However, a general-purpose operational amplifier can be used in accordance with the contents of stored information.

According to the foregoing embodiment, information concerning a flowing current at the time of a tripping operation of a circuit breaker or the time of a normal use thereof can be displayed by connecting a small-sized portable power unit or an external display unit with a buttery incorporated therein to the circuit breaker. Therefore, it is not required that a power unit for external control having a large capacity is always connected. As a result, the reduction of the cost of a system at the time of construction thereof can be attained.

Also, the function of displaying the information concerning a flowing current at the time of a tripping operation of the circuit breaker or the time of the normal use thereof can be used in common with a multiplicity of circuit breakers. Therefore, even if a display part is not mounted on the circuit breaker body, it is possible to cope with an increase of the amount of information to be displayed, thereby reducing the cost of the circuit breaker body. Further, since stored information can be externally reset, it becomes possible to grasp the variations of the value of information over a long period of time, thereby performing an effective management.

## Claims

1. A circuit breaker for detecting a load current flowing through an AC circuit and for performing a tripping operation, comprising:
non-volatile storage means (8) for storing information on detected current values,
control means (5) for tripping control on the basis of a detected current value,
display means (9) for displaying information stored in said non-volatile storage means, and
a power source supplying an operating voltage to said control means and said non-volatile storage means,
characterised in
that said control means (5) include means for writing a detected current value into the non-volatile storage means when the detected current value is larger than a current value previously stored in the non-volatile storage means, and
that said control means (5) and said non-volatile storage means (8) are provided in a circuit breaker body (1), whereas said power source is provided in an external power unit (12) having a connector (12a) to be connectable to said circuit breaker body for applying said operating voltage and reading the data stored in said non-volatile memory means, when the current applied to the AC circuit has been interrupted by said tripping control.

2. A circuit breaker according to claim 1, wherein said display means (9) displays a tripping operation region of the circuit breaker.

3. A circuit breaker according to claim 1, comprising an external display unit (13) connectable to said control means (5) and having an input portion for input of items to be displayed and a display portion, said external display unit selectively displaying information related to the tripping control and the current information stored in said non-volatile storage means (8).

4. A method of controlling a circuit breaker which detects a load current flowing through an AC circuit to perform a tripping operation, comprising the following steps:
sampling information on the current through the AC circuit at predetermined sampling times,
reading from a non-volatile storage means (8) current information stored at a previous sampling time,
comparing presently sampled current information with said read current information and updating the stored current information when the presently sampled current is larger than the current at said previous sampling time,
performing a tripping operation when a sampled current through the AC circuit is an overcurrent, and
connecting an external power unit (12) to said non-volatile storage means when said tripping operation has been performed, to read the information stored in said non-volatile storage means.

5. A method according to claim 4, wherein said step of performing a tripping operation includes a substep of judging whether the overcurrent exceeds a time limit.

## Patentansprüche

1. Schaltungsunterbrecher zur Erfassung eines durch einen Wechselstromkreis fließenden Laststroms und zur Ausführung einer Auslösefunktion, aufweisend:
eine nichtflüchtige Speichereinrichtung (8) zur Speicherung von Informationen über erfaßte Stromwerte,
eine Steuereinrichtung (5) zur Steuerung einer Auslösung auf der Grundlage eines erfaßten Stromwerts,
eine Anzeigeeinrichtung (9) zur Anzeige von in der nichtflüchtigen Speichereinrichtung gespeicherten Informationen, und
eine eine Betriebsspannung an die Steuereinrichtung und die nichtflüchtige Speichereinrichtung liefernde Spannungsquelle,
dadurch **gekennzeichnet,**
daß die Steuereinrichtung (5) eine Einrichtung zum Einschreiben eines erfaßten Stromwerts in die nichtflüchtige Speichereinrichtung, wenn der erfaßte Stromwert größer als ein zuvor in der nichtflüchtigen Speichereinrichtung gespeicherter Stromwert ist, aufweist, und
daß die Steuereinrichtung (5) und die nichtflüchtige Speichereinrichtung (8) in einem Schaltungsunterbrecher-Körper (1) angeordnet sind, während die Spannungsquelle in einer externen Spannungsversorgungseinheit (12) vorgesehen ist, die einen mit dem Schaltungsunterbrecher-Körper verbindbaren Anschluß (12a) aufweist, um die genannte Betriebsspannung zuzuführen und die in der nichtflüchtigen Speichereinrichtung gespeicherten Daten zu lesen, wenn der dem Wechselstromkreis zugeführte Strom durch die Auslösesteuerung unterbrochen wurde.

2. Unterbrecher nach Anspruch 1, wobei die Anzeigeeinrichtung (9) einen Bereich für die Auslösefunktion des Schaltungsunterbrechers anzeigt.

3. Unterbrecher nach Anspruch 1, mit einer externen Anzeigeeinheit (13), die mit der Steuereinrichtung (5) verbindbar ist und einen Eingangsabschnitt zur Eingabe von anzuzeigenden Einzelheiten und einen Anzeigeabschnitt aufweist, und die wahlweise Informationen über die Auslössesteuerung sowie die in der nichtflüchtigen Speichereinrichtung (8) gespeicherten Strominformationen anzeigt.

4. Verfahren zur Steuerung eines Schaltungsunterbrechers, der einen durch einen Wechselstromkreis fließenden Laststrom erfaßt, um eine Auslösefunktion durchzuführen, mit folgenden Schritten:
Abtasten von Informationen über einen durch den Wechselstromkreis fließenden Strom zu bestimmten Abtastzeitpunkten,
Lesen von zu einem vorangegangenen Abtastzeitpunkt gespeicherten Strominformationen aus einer nichtflüchtigen Speichereinrichtung (8),
Vergleichen von gerade abgetasteten Strominformationen mit den gelesenen Strominformationen und Aktualisieren der gespeicherten Strominformationen, wenn der gerade abgetastete Strom größer als der Strom zu dem vorangegangenen Abtastzeitpunkt ist,
Durchführen einer Auslösefunktion, wenn ein abgetasteter Strom durch den Wechselstromkreis einen Überstrom darstellt, und
Anschließen einer externen Spannungsversorgungseinheit (12) an die nichtflüchtige Speichereinrichtung, wenn die Auslösefunktion durchgeführt worden ist, um die in dieser gespeicherten Informationen zu lesen.

5. Verfahren nach Anspruch 4, wobei der Schritt zur Durchführung einer Auslösefunktion einen Unterschritt zur Beurteilung, ob der Überstrom eine Zeitschranke übersteigt, aufweist.

## Revendications

1. Disjoncteur pour détecter un courant de charge circulant à travers un circuit de courant alternatif et pour réaliser une opération de déclenchement, comportant :
des moyens formant mémoire non-volatile (8) pour mémoriser des informations concernant des valeurs de courant détecté,
des moyens de commande (5) pour commander un déclenchement sur la base d'une valeur de courant détecté,
des moyens d'affichage (9) pour afficher des informations mémorisées dans lesdits moyens formant mémoire non-volatile, et
une source de courant envoyant une tension de fonctionnement vers lesdits moyens de commande et lesdits moyens formant mémoire non-volatile,
caractérisé en ce que
lesdits moyens de commande (5) comportent des moyens pour écrire une valeur de courant détecté dans les moyens formant mémoire non-volatile lorsque la valeur de courant détecté est plus grande qu'une valeur de courant mémorisée précédemment dans les moyens formant mémoire non-volatile, et
en ce que lesdits moyens de commande (5) et lesdits moyens (8) formant mémoire non-volatile sont agencés dans un corps de disjoncteur (1), alors que ladite source de courant est agencée dans une unité de courant extérieure (12) ayant un connecteur (12a) pouvant être connecté audit corps de disjoncteur pour appliquer ladite tension de fonctionnement et lire les données mémorisées dans lesdits moyens formant mémoire non-volatile, lorsque le courant appliqué au circuit de courant alternatif a été interrompu par ladite commande de déclenchement.

2. Disjoncteur selon la revendication 1, dans lequel lesdits moyens d'affichage (9) affichent une zone d'opération de déclenchement du disjoncteur.

3. Disjoncteur selon la revendication 1, comportant une unité d'affichage externe (13) pouvant être reliée auxdits moyens de commande (5) et ayant une partie d'entrée destinée à entrer des items à afficher et une partie d'affichage, ladite unité d'affichage externe affichant de manière sélective des informations concernant la commande de déclenchement et les informations de courant mémorisées dans lesdits moyens (8) formant mémoire non-volatile.

4. Procédé de commande d'un disjoncteur qui détecte un courant de charge circulant à travers un circuit de courant alternatif pour réaliser une opération de déclenchement, comportant les étapes consistant à :
échantillonner des informations concernant le courant à travers le circuit de courant alternatif à des temps d'échantillonnage prédéterminés,
lire dans des moyens (8) formant mémoire non-volatile des informations de courant mémorisées à un temps d'échantillonnage précédent,
comparer les informations de courant présentement échantillonnées avec lesdites informations de courant lues et mettre à jour les informations de courant mémorisées lorsque le courant présentement échantillonné est plus grand que le courant audit moment d'échantillonnage précédent,
réaliser une opération de déclenchement lorsqu'un courant échantillonné à travers le circuit de courant alternatif est un courant de surcharge, et
connecter une unité de courant extérieure (12) auxdits moyens formant mémoire non-volatile lorsque ladite opération de déclenchement a été réalisée, pour lire les informations mémorisées dans lesdits moyens formant mémoire non-volatile.

5. Procédé selon la revendication 4, dans lequel ladite étape consistant à réaliser une opération de déclenchement comporte une sous-étape consistant à déterminer si oui ou non le courant de surcharge dépasse une limite de temps.
